# EUROPEAN PATENT APPLICATION

(11) **EP 2 066 137 A1**
(43) Date of publication of application: **03.06.2009**
(21) Application number: 06798406.2
(22) Date of filing: 28.09.2006
(51) Int. Cl.: H04Q 7/38

(54) **RADIO BASE STATION FOR DEGENERACY OPERATION OF MOBILE COMMUNICATION SYSTEM IN DISASTER AND MOBILE COMMUNICATION SYSTEM**

(71) Applicant: Fujitsu Limited, Kawasaki-shi, Kanagawa 211-8588 (JP)
(72) Inventor: ONO, Mitsuhiro, Kawasaki-shi, Kanagawa 211-8588 (JP)
(74) Representative: Stebbing, Timothy Charles
(86) International application number: PCT/JP2006/319358
(87) International publication number: WO 2008/038384

(57) **Abstract**

A mobile communication system prevents the reduction of large communication range even during disasters. A wireless base station includes a communication unit allocates frequency bands and output powers corresponding to distribution areas of wireless terminals, and performs communication with the wireless terminals. The communication unit uses a modulation method with a large number of multiple values to perform communication with wireless terminals in an area with small distribution area in proximity to the center of the cell area, and uses modulation methods with successively smaller numbers of values to perform communication with wireless terminals in larger distribution areas moving toward the peripheral regions of the cell area, and during a disaster, uses a modulation method with the smallest to perform communication over all distribution areas, sets the output power to the lowest value in communication with wireless terminals in an area with small distribution area in proximity to the center of the cell area, and sets the output power so as to increase gradually in communication with wireless terminals in larger distribution areas moving toward the peripheral regions of the cell area.

## Description

### FIELD

This invention relates to a wireless base station which operates in a degraded mode in a mobile communication system.

### BACKGROUND

In mobile communication systems, communication is performed between wireless base stations and terminals for the purpose of circuit connection. At this time, as factors which are considered from the standpoint of communication efficiency and quality, it is desirable that a wireless base station have large coverage (communication range) and high throughput (communication speed).

In order to attain these goals, methods are employed to increase the output power of a wireless base station over circuits from the wireless base station to terminals (downlinks). Here, a high output power means power consumption is also high, and so there is a tendency to employ devices with lower power consumption.

Given this background, cases of the occurrence of a major disaster such as an earthquake are considered. In such cases, circuit usage is greater than normal, due to use to confirm the safety of others, request emergency help, and similar. On the other hand, it is also anticipated that because of the disaster, the circumstances of power supply are worsened, so that a wireless base station cannot obtain large amounts of power, or the batteries of terminals cannot easily be recharged.

In such circumstances, service is continued with a portion of the functions in degraded operation.

Under these circumstances, it is conceivable that, while reducing the output power of the wireless base station and of terminals, degraded operation may be employed so as to enable use by as many subscribers as possible, without detracting from throughput (communication speed).

In the past, various methods for operation of such communication systems in degraded mode have been conceived.

For example, technology of the prior art includes the inventions disclosed in Patent Reference 1 (Japanese Laid-open Patent Application No. 2001-224073) and Patent Reference 2 (Japanese Laid-open Patent Application No. 2003-289584). In the inventions of Patent References 1 and 2, because concentration of traffic occurs during disasters, so that calls which exceed the capacity of wireless base stations occur, methods are provided to regulate access by terminals.

And, an invention is disclosed in Patent Reference 3. The invention of Patent Reference 3 (Japanese Laid-open Patent Application No. 2005-252548) is a method in which emergency communications are handled with priority; terminals do not use the normal modulation method in times of emergency, but use a modulation method with high transmission power in proximity to the carrier wave frequency for access; and a wireless base station, upon receiving such signals, regulates other calls, and secures circuits such that telephone communication is possible only for emergency calls.

### SUMMARY

An object of this invention is to provide an optimal degradation method in a mobile communication system during disasters, differing from the inventions disclosed in the above-described Patent References 1, 2, and 3, as well as to provide a wireless base station and mobile communication system which employ this method.

An object of this invention is to achieve effective degradation utilizing the characteristics of WiMAX (Worldwide Interoperability for Microwave Access) systems in particular, that is, reducing wireless base station output power in order to suppress the power consumption of wireless base stations during disasters. A method is provided in which, at such times, the output power and frequency bandwidth are determined for each modulation method particular to a WiMAX system, and the overall output power is reduced.

A further object of the invention is to prevent the reduction of large coverage (communication range) even in such a state, or, to increase throughput even when there is reduction of coverage.

To achieve the above described objects, in a first mode according to the present invention, a wireless base station, which is one among a plurality of wireless base stations in a mobile communication system having the plurality of wireless base stations each forming a cell area, the wireless base station includes: a communication unit which uses prescribed frequency bands and prescribed output powers to allocate the frequency bands and output powers corresponding to distribution areas of wireless terminals, and performs communication with the wireless terminals, and **characterized in that** during normal operation, the communication unit uses a modulation method with a large number of multiple values to perform communication with wireless terminals in an area with small distribution area in proximity to the center of the cell area, and uses modulation methods with successively smaller numbers of values to perform communication with wireless terminals in larger distribution areas moving toward the peripheral regions of the cell area, and during a disaster, the communication unit uses a modulation method with the smallest number of multiple values to perform communication over all distribution areas, sets the output power to the lowest value in communication with wireless terminals in an area with small distribution area in proximity to the center of the cell area, and sets the output power so as to increase gradually in communication with wireless terminals in larger distribution areas moving toward the peripheral regions of the cell area.

To achieve the above-described objects, in a second mode according to the present invention, a wireless base station, which is one among a plurality of wireless base stations in a mobile communication system having the plurality of wireless base stations each forming a cell area, the wireless base station comprising a communication unit which uses prescribed frequency bands and prescribed output powers to allocate the frequency bands and output powers corresponding to distribution areas of wireless terminals, and performs communication with the wireless terminals, and **characterized in that** during normal operation, the communication unit uses a modulation method with a large number of multiple values to perform communication with wireless terminals in an area with small distribution area in proximity to the center of the cell area, and uses modulation methods with successively smaller numbers of values to perform communication with wireless terminals in larger distribution areas moving toward the peripheral regions of the cell area, and during a disaster, the communication unit uses a plurality of modulation methods to perform communication with wireless terminals in an area with small distribution area in proximity to the center of the cell area, and uses a successively smaller number of modulation methods to perform communication with wireless terminals in larger distribution areas moving toward the peripheral regions of the cell area.

Additionally, in a third mode according to the present invention, the wireless base station according to the second mode, **characterized in that** when communication is performed using the successively smaller number of modulation methods during the disaster, settings are made such that modulation methods with smaller numbers of values are used.

To achieve the above-described objects, in a fourth mode according to the present invention, a mobile communication system, includes: a plurality of wireless base stations each forming a cell area, **characterized in that** during normal operation, settings are made such that a plurality of frequency bands obtained by equal division of prescribed frequency bands are allocated to the plurality of base stations such that one frequency band used in the cell area is different from that of an adjacent cell area, and during a disaster, all of the plurality of frequency bands obtained by equal division are allocated in common to the plurality of base stations, and output powers are set to be low such that there is no overlap with adjacent cell areas.

In addition, to achieve the above-described objects, in a fifth mode according to the present invention, a mobile communication system, includes: a plurality of wireless base stations each forming a cell area, **characterized in that** during normal operation, settings are made such that a plurality of frequency bands obtained by equal division of prescribed frequency bands are allocated to the plurality of base stations such that one frequency band used in the cell area is different from that of an adjacent cell area, and during a disaster, settings are made such that among a plurality of frequency bands obtained by equal division of a first frequency band among the prescribed frequency bands to the cell areas, one frequency band used in the cell area is allocated so as to be different from that of an adjacent cell area, the remaining frequency bands excluding the first frequency band from the prescribed frequency bands are allocated in common to the cell areas of the plurality of base stations, and output powers are set low such that there is no overlap with adjacent cell areas.

Further, the mobile communication system according to the fifth mode, **characterized in that** the first frequency band is used for emergencies.

Through the above characteristics when this invention is applied, effective operation in a degraded mode can be performed such that, even in a state such as during a disaster, the occurrence of a large reduction in coverage (communication range) can be prevented, or, when there is a reduction of coverage, the throughput can be made large.

### BRIEF DESCRIPTION OF DRAWINGS

Fig. 1 shows an example of the configuration of a WiMAX (Worldwide Interoperability for Microwave Access) system network;
Fig. 2A shows the relation between the frequency band allocated to one wireless base station during normal use and power;
Fig. 2B shows the range of coverage corresponding to Fig. 2B;
Fig. 3A shows the relationship between frequency band allocation and power during degraded-mode operation, to which operation is switched during a disaster according to this invention;
Fig. 3B shows the range of coverage corresponding to Fig. 3A;
Fig. 4 is a block diagram of an example of the configuration of a wireless base station which realizes the above-described first embodiment;
Fig. 5 is a block diagram of an example of the summary configuration of the OFDM modulator 1, as a communication unit in the configuration example of a wireless base station of Fig. 4;
Fig. 6 shows the flow of processing to execute processing of this invention mainly in the OFDM modulator 1.
Fig. 7 is a table showing a relation between the modulation method and the output power in the first embodiment;
Fig. 8A shows the relation between frequency band allocation and power when switched to degraded-mode operation during a disaster according to a second embodiment of the invention;
Fig. 8B shows the range of coverage corresponding to Fig. 8A;
Fig. 9 is a block diagram of an example of the configuration of a wireless base station which realizes the second embodiment;
Fig. 10 is a table showing the relation between the modulation method and the output power in the third embodiment;
Fig. 11A explains the concept of station placement according to a third embodiment;
Fig. 11B explains degradation from the normal operation of Fig. 11A to operation during a disaster in the third embodiment;
Fig. 12 shows the output power of each wireless base station and frequency band;
Fig. 13 indicates the power after switching during a disaster in the third embodiment;
Fig. 14 is a block diagram of a wireless base station corresponding to the third embodiment;
Fig. 15 is a table showing a relationship between the modulation method and the output power in the third embodiment;
Fig. 16 explains the concept of station placement during a disaster, illustrating the characteristics of this fourth embodiment;
Fig. 17 shows the relationship between frequency allocation and power in cell areas A to D in operation during a disaster;
Fig. 18 shows the configuration of a wireless base station which accommodates the fourth embodiment.

### DESCRIPTION OF EMBODIMENTS

Below, embodiments are explained referring to the drawings.

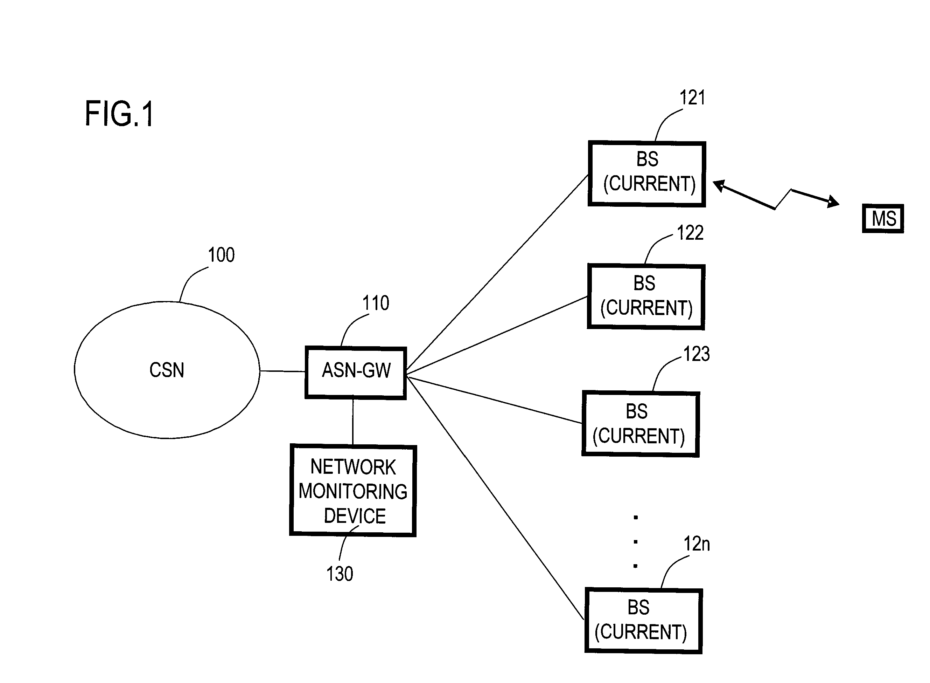

Fig. 1 shows an example of the configuration of a WiMAX (Worldwide Interoperability for Microwave Access) system network. The connection service network (CSN) 100 is connected to a plurality of wireless base stations (BS) 121 to 12n via an access service network (ASN) serving as a gateway (GW).

In general, the plurality of wireless base stations (BS) 121 to 12n have a current-reserve device configuration to accommodate device failures. A mobile station MS communicates with the wireless base station of the area in which it is located.

Further, a network monitoring device 130 is provided in the access service network 110; network faults are monitored by the network monitoring device 130, and switching between current and reserve configurations of wireless base stations, or degradation control according to this invention as explained below, are performed based on an alarm signal ALM from the network monitoring device 130.

On the other hand, in a WiMAX system, an adaptive modulation method is used, and circuit quality is good in communications with a wireless terminal positioned in proximity to a wireless base station, and so 64QAM or another QAM modulation method in which the number of multiple values can be increased is applied, and the wireless base stations are controlled so as to provide high-throughput service.

Conversely for a wireless terminal on the periphery of the area of a cell corresponding to a wireless base station (the cell edge), circuit quality is poor, and so the wireless base station is controlled so as to employ QPSK modulation method and provide low-throughput service.

However, when times of disaster (such as the occurrence of a major earthquake) are considered, numerous calls are expected to occur for the purpose of emergency communication. Together with this, a state ensues in which power supply to wireless base stations and wireless terminals, and battery consumption, must be suppressed.

In light of this, the present invention provides a method of cell degraded-mode operation in which limits are added to adaptive modulation methods such that throughput is sacrificed slightly, but service can be provided without changing the coverage (range over which communication is possible), and all wireless terminals use the same modulation method.

### First Embodiment

Below, a method of distribution of frequencies and output power according to a first embodiment is explained. It is assumed that wireless terminals located within the cell area (cell region) of the wireless base station are distributed uniformly. Further, it is assumed that the frequency band which can be used in the WiMAX system is 20 MHz, and that the output power is 20 W at 20 MHz (hereafter denoted by "20 W @ 20 MHz" or similar).

With respect to the relation between the modulation method employed and the subscriber (wireless terminal) distribution, it may be assumed that the area of the distribution can be found from the SNR (signal-to-noise ratio) value of the modulation method employed, and that subscribes are also distributed in proportion to this area.

Here, suppose that the SNR of the 64QAM modulation method is 14 dB, that the SNR of the 16QAM method is 9 dB, and that the SNR of the QPSK method is 3.5 dB.

Assume that the radio propagation loss is proportional to the 3.5th power of the distance, that the cell radius for the QPSK modulation method is 1, that the cell radius for the 16QAM modulation method is 0.7 (= 10^((3.5-9)/35)), and that the cell radius for the 64QAM modulation method is 0.5 (= 10^((3.5-14)/35)).

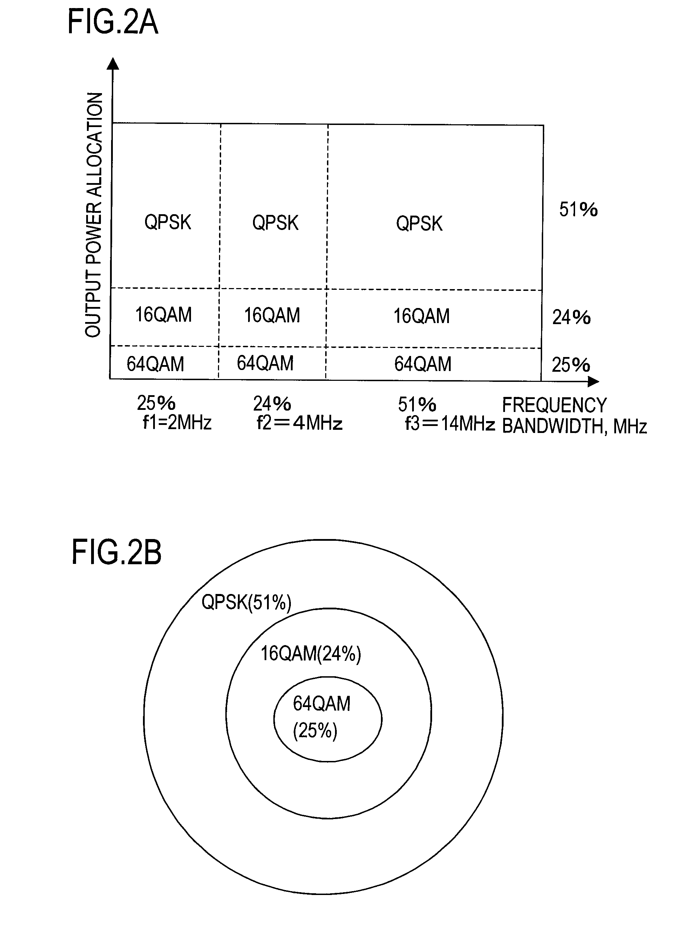

These circumstances are further explained using Fig. 2A and Fig. 2B. Fig. 2A shows the relation between the frequency band allocated to one wireless base station during normal use and power.

That is, the horizontal axis indicates the fraction of frequency band allocation, and the vertical axis indicates the output power allocation.

In the example shown in Fig. 2A, the 64QAM modulation method is employed for wireless terminals in proximity to the wireless base station and high throughput can be provided; the distribution of these subscribers is approximately 25% (= 0.5^2). Similarly, the distribution of subscribers to whom the 16QAM method can be provided is approximately 24% (= 0.7^2-0.5^2), and at the cell edges, the QPSK modulation method is employed, and the subscriber distribution to whom low throughput can be provided is approximately 51%.

In the 20 MHz frequency band, if this subscriber distribution is read as frequency bandwidth, then the result is the same as allocating 2 MHz (f1) in the area over which the 64QAM modulation method can be employed, 4 MHz (f2) in the area over which the 16QAM modulation method can be employed, and 14 MHz (f3) in the area over which the QPSK modulation method can be employed. Hence the coverage ranges of the respective modulation methods centered on the wireless base station are as shown in Fig. 2B.

Starting from the normal state such as shown in Fig. 2A and Fig. 2B, degraded-mode operation is performed during disasters according to this invention.

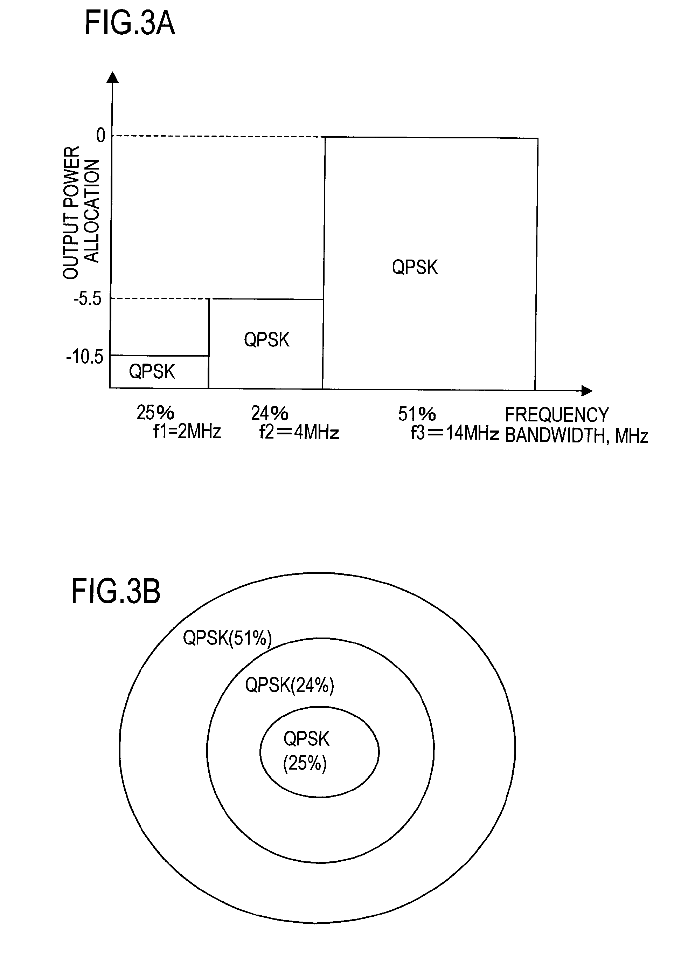

Fig. 3A shows the relationship between frequency band allocation and power during degraded-mode operation, to which operation is switched during a disaster according to this invention. Fig. 3B shows the range of coverage corresponding to Fig. 3A. In this example, the modulation method is switched to the QPSK method only. Further, the output power is controlled in degraded mode according to the frequency band allocation.

In the example shown, within the 20 MHz frequency band, output power attenuation of -10.5 dB and -5.5 dB is performed for the 25% band portion at 2 MHz (= f1) and for the 24% band portion at 4 MHz (= f2), respectively.

By this means, as shown in Fig. 3B, the 25% band portion coverage, 24% band portion coverage, and 51% band portion coverage are set so as to be different.

By this means, during a disaster, consumption of electric power, which is expected to be depleted, can be reduced, and moreover communication with wireless terminals extending over a broad range can be maintained.

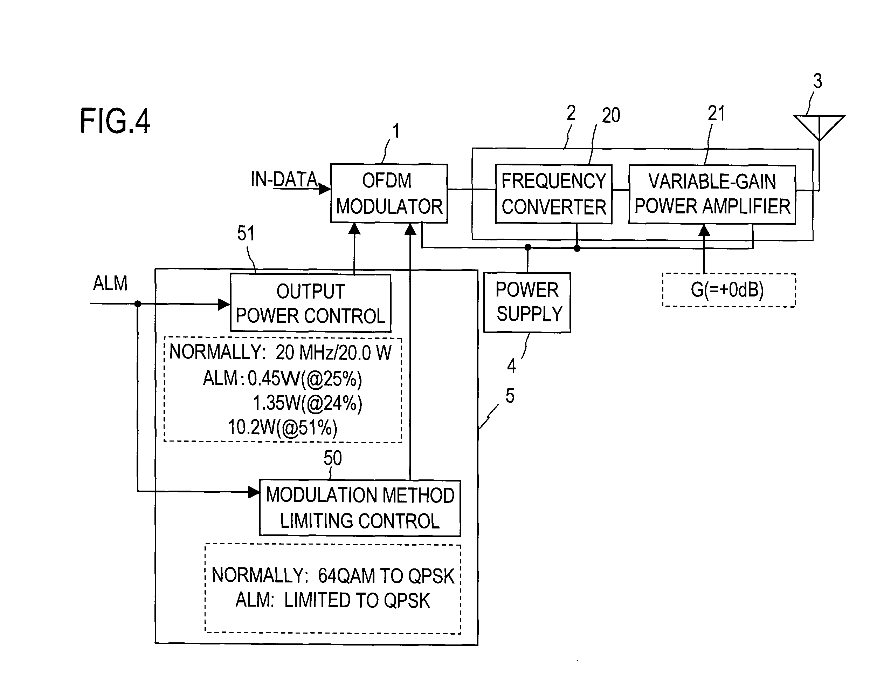

Fig. 4 is a block diagram of an example of the configuration of a wireless base station which realizes the above-described first embodiment.

The input data (IN-DATA) which is traffic information data is OFDM modulated by the OFDM modulator 1. At this time, a usage frequency band is set in the OFDM modulator 1. The baseband output of the OFDM modulator 1 is input to the RF (radio frequency) transmission portion 2.

In the RF (radio frequency) transmission portion 2, conversion to the wireless frequency is performed by the frequency converter 20, power amplification is performed by the variable-gain power amplifier 21, and the result is transmitted from the antenna 3. At this time, power is supplied to the various portions by the power supply 4.

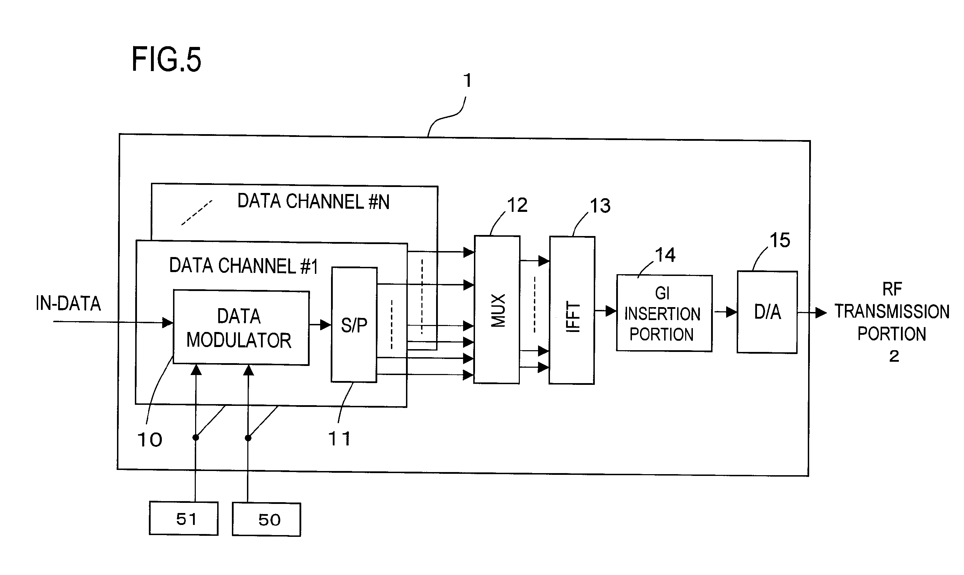

Fig. 5 is a block diagram of an example of the summary configuration of the OFDM modulator 1, as a communication unit in the configuration example of a wireless base station of Fig. 4.

In Fig. 5, data channels #1 to #N associated with respective wireless terminals #1 to #N have a common configuration. In each of the data channels #1 to #N, baseband processing is performed for transmission of traffic information data (IN-DATA) in OFDM format. After QPSK, 16QAM, 64QAM or other modulation, the data modulator 10 modulates the traffic information data IN-DATA using an appropriate modulation method selected by the modulation method limiting control portion 50 of the control portion 5 (see Fig. 4), explained below.

By variably controlling the number of encoding bits in the data modulator 10 by means of the output power control portion 51 of the control portion 5, explained below, the output power of the data modulator 10 is modified.

The serial/parallel conversion portion (S/P) 11 converts serial signal series output of the data converter 10 into parallel signal series.

The multiplexing portion 12 multiplexes traffic information data processed for each of the data channels #1 to #N. The output after multiplexing is input to the inverse fast Fourier transform portion 13, and the input signal is subjected to the fast Fourier transform to perform OFDM modulation.

The guard interval conversion portion 14 adds guard intervals to signals after modulation, to create OFDM format symbols. The digital analog conversion portion 15 converts baseband digital signals into analog signals, which are transmitted to the RF transmission portion 2.

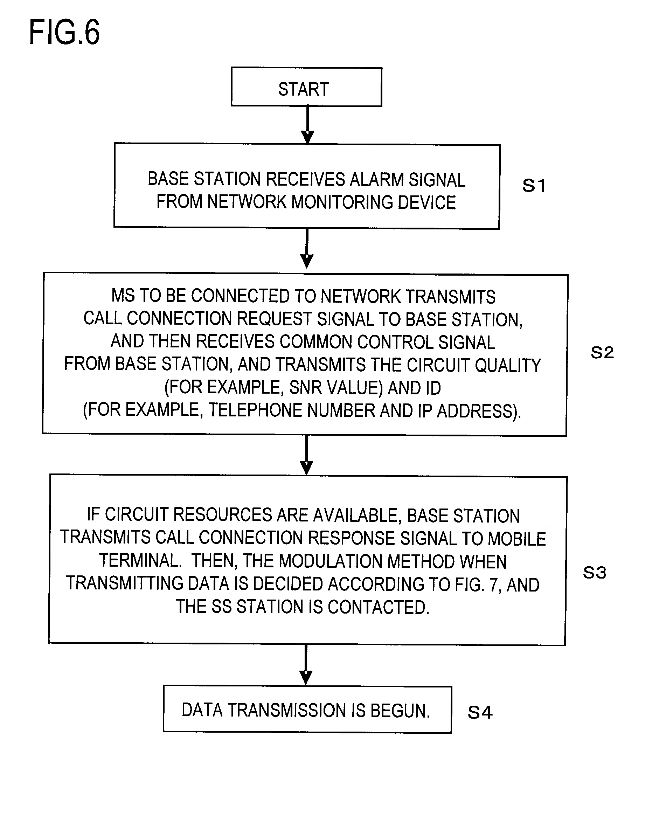

Fig. 6 shows the flow of processing to execute processing of this invention mainly in the OFDM modulator 1. The processing procedure in the OFDM modulator 1 is similar in the other embodiments described below as well.

Control of the wireless base station and OFDM modulator 1 of Fig. 4 and Fig. 5 is explained, following the processing flow of Fig. 6.

In communication processing, as initiation of control according to this invention during a disaster, the network monitoring device 130 monitors faults in wireless base stations and the disaster, and upon detecting a disaster for which power control is necessary, outputs an alarm signal ALM which is transmitted to each of the wireless base stations via the access service network (ASN) 110.

Hence in a wireless base station, this alarm signal ALM is received (step S1) and is input to the control portion 5.

A call connection request signal is sent from a wireless terminal MS which wishes to connect to the network to the wireless base station of the cell in which it is located.

At this time, the wireless terminal MS receives a common control signal from the wireless base station, and transmits the circuit quality (for example, the SNR value) and an identifier (ID; for example, the telephone number and address IP address) (step S2).

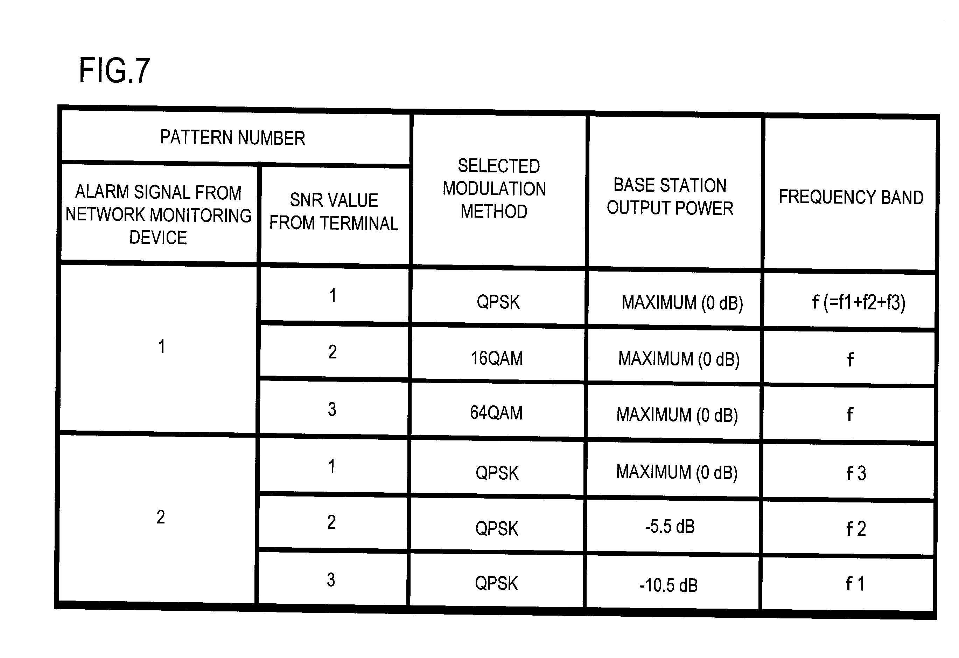

If the wireless base station has circuit resources, the wireless base station transmits a call connection response signal to the wireless terminal MS. At this time, the control portion 5 decides the modulation method and output power when transmitting data according to the table shown in Fig. 7 and set in advance, based on the circuit quality and identifier sent from the wireless terminal MS, and notifies the wireless terminal MS of the modulation method thus decided (step S3).

By this means, communication is begun between the wireless base station and the wireless terminal (step S4). The signal transmission and reception between the wireless base station and the wireless terminal MS in the above step S2 and step S3 is possible using existing technology not directly related to this invention, and so further details are omitted.

However, a characteristic of this invention is that the modulation method and output power when the control portion 5 transmits data according to the table shown in Fig. 7 are controlled by the modulation method limiting control portion 50 and the output power control portion 51 respectively of the control portion 5.

Hence these portions are further explained. The table shown in Fig. 7 employs as pattern numbers "1" when there is no alarm signal ALM sent from the network monitoring device 130 upon detection of the occurrence of a disaster (normal or ordinary conditions), and "2" when there is an alarm signal ALM (when there is an anomaly or a disaster); further, values of "1", "2", and "3" are defined according to the range of SNR values, which are the signal-to-noise ratios of received signals, as indicated by the wireless terminal MS.

Definitions of SNR value ranges may for example be decided as follows.

"1" is defined as when the SNR value of received signals at the wireless terminal MS, as notified by the wireless terminal MS is from 3.5 dB to less than 9.0 dB, "2" is when the value is from 9.0 dB to less than 16.0 dB, and "3" is when the value is 16.0 dB or higher.

And, the table associates combinations (called pattern numbers) of these numerical values defined according to the presence or absence of an alarm signal and of numerical values defined for ranges of SNR values from wireless terminals MS, with the modulation method selected and the wireless base station output power.

For example, when the alarm signal ALM from the network monitoring device 130 is "normal", when the SNR value from a wireless terminal MS is 16 dB, the pattern number for the terminal is 13, and 64QAM, with a large number of multiple values, is selected as the modulation method. At this time, the wireless base station output power is set to maximum (0 dB).

However, if the alarm signal from the network monitoring device 130 is "abnomal", when the SNR value from a wireless terminal MS is 16 dB, the pattern number for the terminal is 23, and the QPSK method, which is a modulation method with a small number of multiple values and low throughput, is selected, and the output power of the wireless base station is controlled at -10.5 dB.

That is, during a disaster (such as for example a major earthquake), when it is necessary to suppress the supply of power to wireless base stations, QPSK modulation is employed and throughput is reduced even for wireless terminals in proximity to a wireless base station. By this means, the output power of the wireless base station can be reduced.

Further, in order to adjust the output power, the frequency band is divided according to the distribution of subscribers. As frequency band allocation, 5 MHz @ 5 W is allocated to the 64QAM region, 4.8 MHz @ 4.8 W is allocated to the 16QAM region, and 10.2 MHz @ 10.2 W is allocated to the QPSK region. If the power required for QPSK service is "1", then power can be reduced by approximately 0.09 (= 10^(3.5-14)) in the 64QAM region, and by 0.28 (= 10^(3.5-9)) in the 16QAM region. Converting into power for the wireless base station as a whole, power can be reduced by approximately 2.2 dB (= 10 x LOG(0.09 x 0.25 + 0.28 x 0.24 + 1 x 0.51).

Hence by sacrificing throughput without changing coverage, service can be continued.

### Second Embodiment

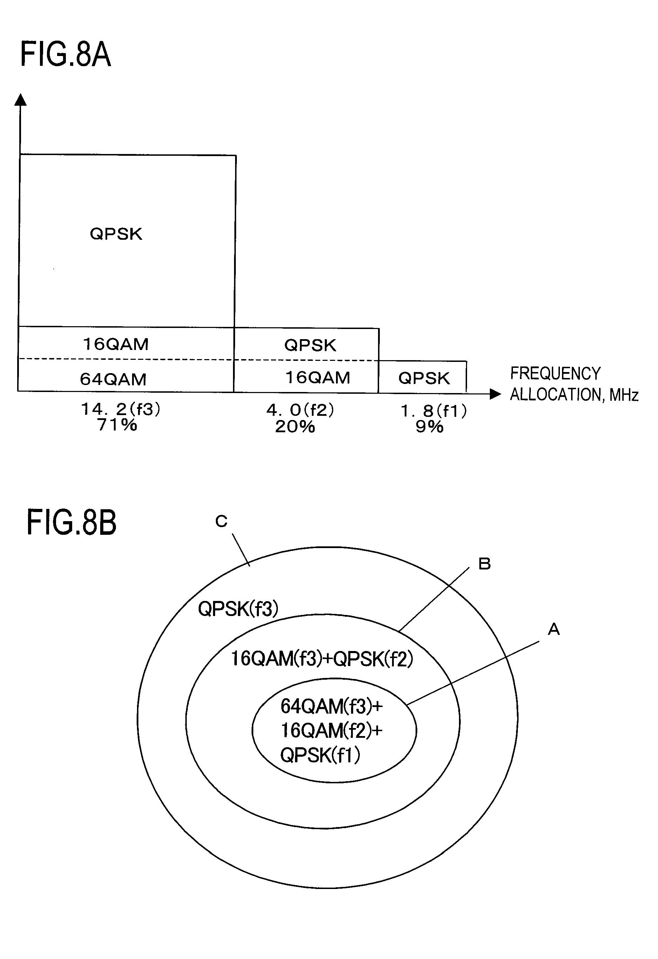

Fig. 8A shows the relation between frequency band allocation and power when switched to degraded-mode operation during a disaster according to a second embodiment of the invention. Fig. 8B shows the range of coverage corresponding to Fig. 8A.

As explained previously, it is assumed that the radio propagation loss is proportional to the 3.5th power of the distance, so that if the cell radius for the QPSK modulation method is 1, then the 16QAM modulation method cell radius is 0.7 (= 10^((3.5-9)/35)), and the 64QAM modulation method cell radius is 0.5 (= 10^((3.5-14)/35)).

Hence for wireless terminals in proximity to a wireless base station, the 64QAM modulation method can be employed and high throughput provided, as shown in Fig. 2A, but the subscriber distribution is approximately 25% (= 0.5^2). Similarly, the subscriber distribution to which 16QAM can be provided is approximately 24% (= 0.7^2-0.5^2), and at peripheral sides of the cell (cell edges), the QPSK modulation method is employed, and the subscriber distribution to which low throughput can be provided is approximately 51%.

And, during a disaster (such as for example a major earthquake), when it is necessary to suppress the power supplied to wireless base stations, frequency allocation and power allocation are performed as shown in Fig. 8A and Fig. 8B.

According to this reasoning, normally wireless terminals in a small distribution area in proximity to the wireless base station (A) can receive 64QAM service, but control is performed to enable provision of QPSK service at a certain frequency (f1), 16 QAM service at a certain frequency (f2), and 64QAM service at a certain frequency (f3).

Similarly, in the intermediate area from the wireless base station (B), it should be possible to receive 16QAM service; but QPSK service is received at frequency f2, 16QAM service is received at frequency f3.

A still broader region is assigned to frequency f3 (C). This is due to the following reasoning. In the previous explanation of the first embodiment, the distribution area at the cell edge was 51%, the intermediate distribution area was 24%, and that in proximity to the wireless base station was 25%. On the other hand, in the second embodiment, the 51% distribution area is covered by frequency f3, the 24% distribution area is covered equally by f3 and f2, and the 25% distribution area is covered equally by f1, f2, and f3.

Hence the distribution area covered by the frequency f3 is 0.51 + 0.24/2 + 0.25/3 ≈ 0.71 (71%).

Similarly, the distribution area covered by f2 is 0.24/2+0.25/3 ≈ 0.2 (20%), and the area covered by f1 is 0.25/3 ≈ 0.09 (9%).

The reduction in wireless base station output due to the method of this second embodiment is approximately 1.1 dB (= 10 x LOG(1 x 0.7 + 0.28 x 0.2 + 0.09 x 0.09)). Hence compared with the first embodiment, the reduction in wireless base station output is small, but there is the advantage that 64QAM and 16QAM service can be provided.

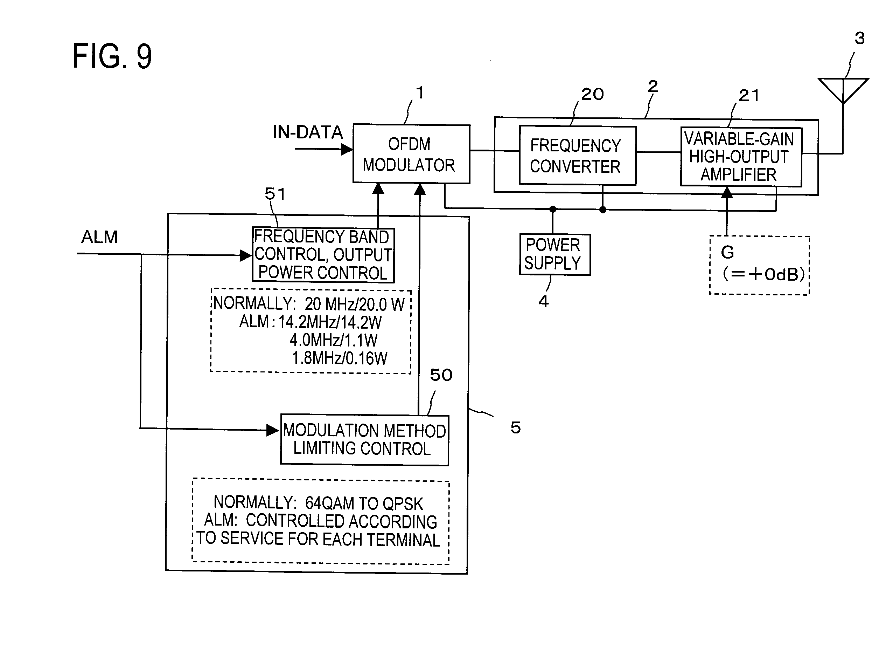

Fig. 9 is a block diagram of an example of the configuration of a wireless base station which realizes the second embodiment. The configuration is similar to that of the first embodiment shown in Fig. 4; only the modulation method limiting control portion 50 in the control portion 5, and the control parameters of the output power control portion 51, are different.

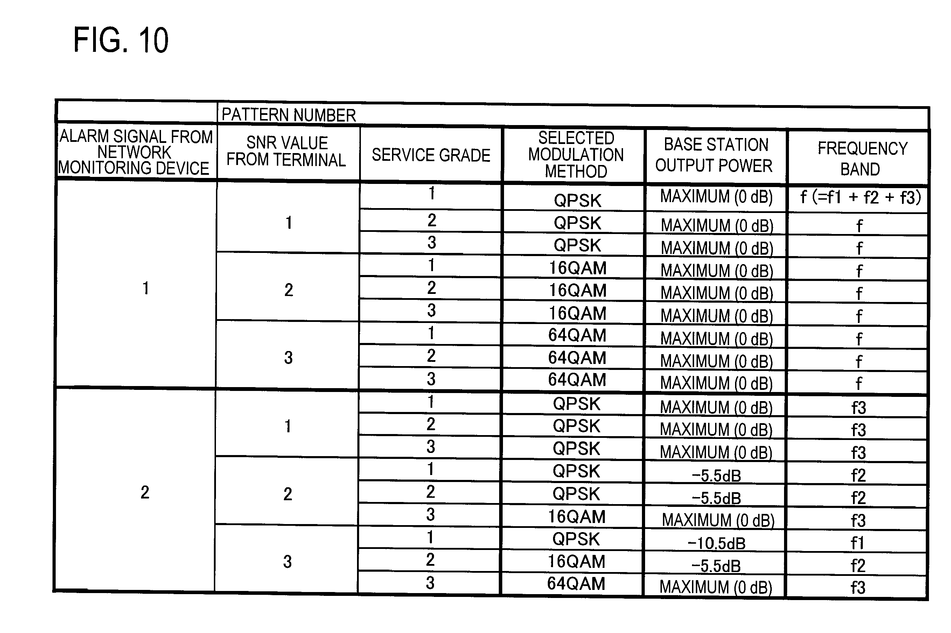

That is, normally operation is similar to the first embodiment. When a disaster state is detected by the network monitoring device 130, an alarm signal ALM is sent and is detected by the control portion 5. The modulation method control portion 50 then selects the modulation method according to the table shown in Fig. 10, and controls the data modulator 10 of the OFDM modulator 1 to modulate data using the selected modulation method.

Referring to Fig. 10, a service grade is further defined. For example, when only the QPSK modulation method can be used due to a system anomaly, the service grade is 1; when the QPSK and 16QAM modulation methods can be used, the service grade is 2; and when the QPSK, 16QAM, and 64QAM modulation methods can be used, the service grade is 3.

And, a pattern number comprising this service grade is set.

During a disaster, when the SNR notification from a terminal is "1", for any service grade from 1 to 3 the QPSK method is selected.

When the pattern number is "223", the 16QAM method is selected.

The data modulator 10 is controlled so as to modulate data according to the modulation method selected in this way.

### Third Embodiment

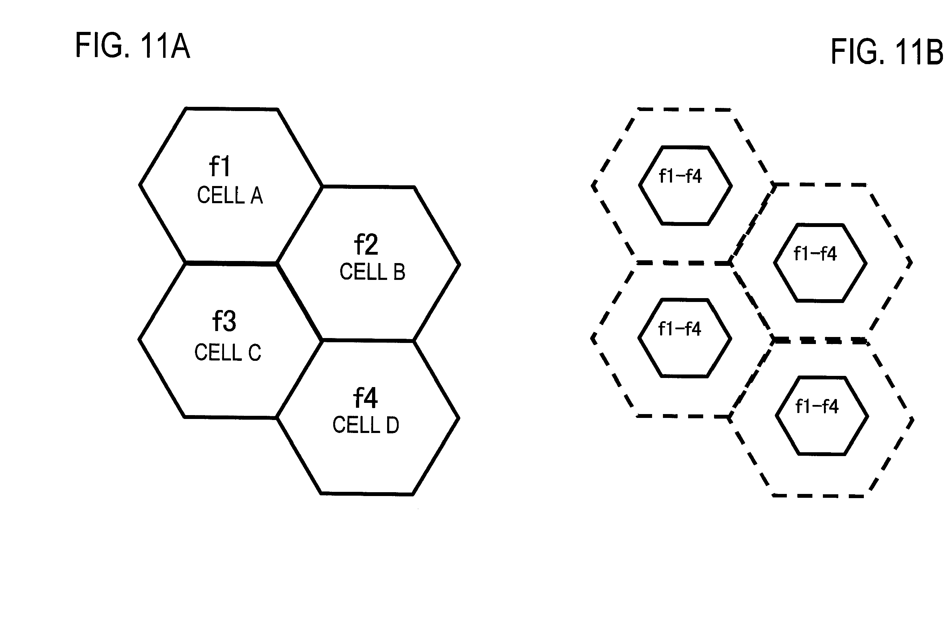

Fig. 11A explains the concept of station placement according to a third embodiment.

When an OMNI device is used to configure a network in a WiMAX system, station placement is performed with for example three or four zones repeated, as shown in Fig. 11A. In order to avoid interference from other cell areas, stations are placed with the frequency changed from that of adjacent cell areas, so as to increase the intervals between cell areas using the same frequency. When four zones are repeated, only 1/4 the frequency bandwidth of the frequency band available for use is allocated in each sector.

One method to reduce the output power of wireless base stations is to reduce the output power of wireless base stations while leaving unchanged the current frequency allocation. In this method, for example, if the output power of a wireless base station is reduced by 10 dB, the power consumption is also reduced, but the coverage (cell radius) is reduced to approximately 1/2.

There is also the method of narrowing the frequency band being used. For example, if the frequency band width is reduced to 1/3, the coverage does not change, but throughput falls to approximately 1/3.

On the other hand, in this invention, a degraded operation method is employed in which coverage is sacrificed slightly in order to accommodate an increase in subscribers wishing to use the system during a disaster (such as for example a major earthquake), but the circuit capacity can be increased by several times while suppressing the supply of power to wireless base stations.

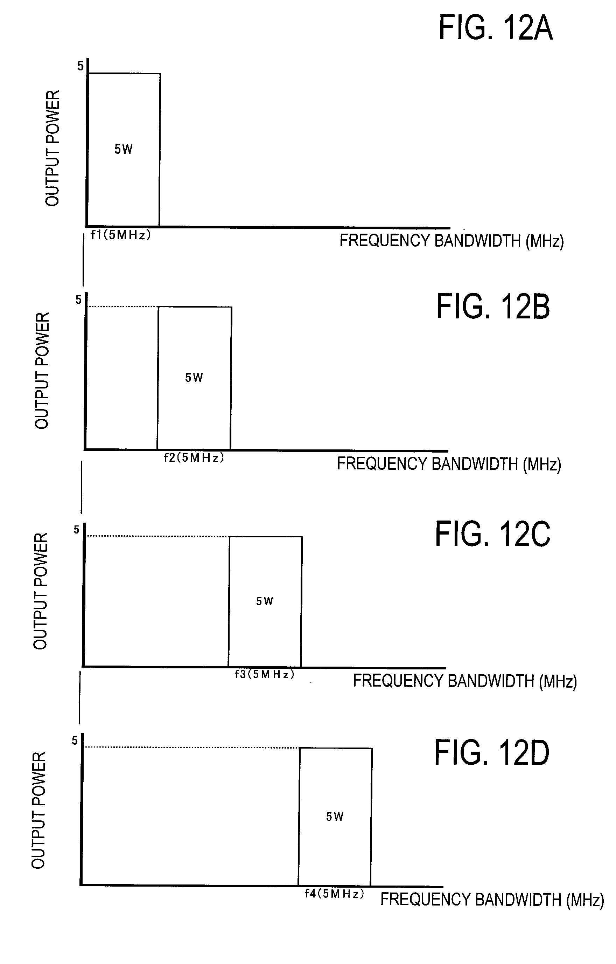

Fig. 11B explains degradation from the normal operation of Fig. 11A to operation during a disaster in the third embodiment. Taking a four-zone repetition as an example, assume that the frequency band which can be used is 20 MHz and that the output power is 20 W @ 20 MHz. In the case of four-zone repetition, the frequency which can be used in each sector is 5 MHz (= 20 MHz/4). The output power of each wireless base station is 5 W @ 5 MHz. This situation is shown in (a) to (d) of Fig. 12.

That is, 5 MHz is allocated to each of the frequency bands f1 to f4 allocated to the cell areas A to D, and moreover an output of 5 W is apportioned to each.

Here, it is necessary to increase circuit capacity in order to be able to accommodate the increase in subscribers wishing to use the system during a disaster (such as for example a major earthquake). Here, as shown in Fig. 11B, four further zones are repeated from the current state, and if the coverage is reduced to 1/2, then the effects of interference from other cell areas can be eliminated, and the frequency bandwidth that can be used in one sector becomes 20 MHz. Coverage becomes narrower, but if subscribers gather in proximity to a wireless base station, accommodation is possible.

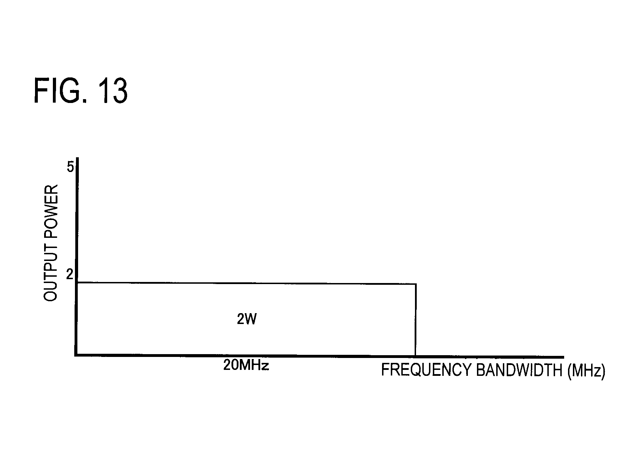

The output power of a wireless base station is considered. The bandwidth that can originally be used is 5 MHz, so that 5 W (= 20 W/4) is output. However, during a disaster 20 MHz is used, so that 20 W becomes necessary. However, coverage is reduced to 1/2, so that the output power can be attenuated by approximately 10 dB, and as shown in Fig. 13 which indicates the power after switching during a disaster, the output power becomes 2 W. Hence the circuit capacity can be increased by four times while reducing the power supplied to wireless base stations to approximately 1/2.5 (5 W → 2 W).

This approach can be employed not only in the case of an OMNI wireless base station configuration, but for three-zone repetition of three-sector wireless base station configurations, and also for three-zone repetition of six-sector wireless base station configurations.

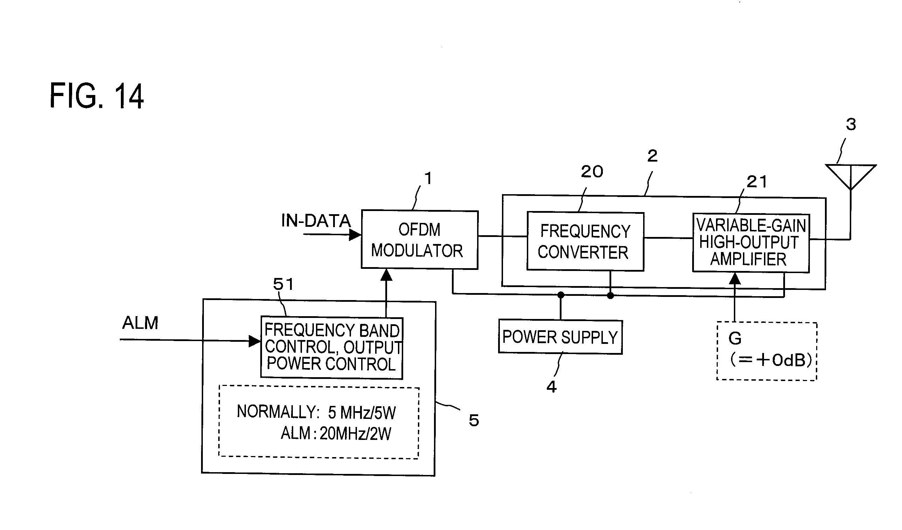

Fig. 14 is a block diagram of a wireless base station corresponding to the above third embodiment. The configuration is similar to that of the second embodiment shown in Fig. 9; only the modulation method limiting control portion 50 in the control portion 5, and the control parameters of the output power control portion 51, are different.

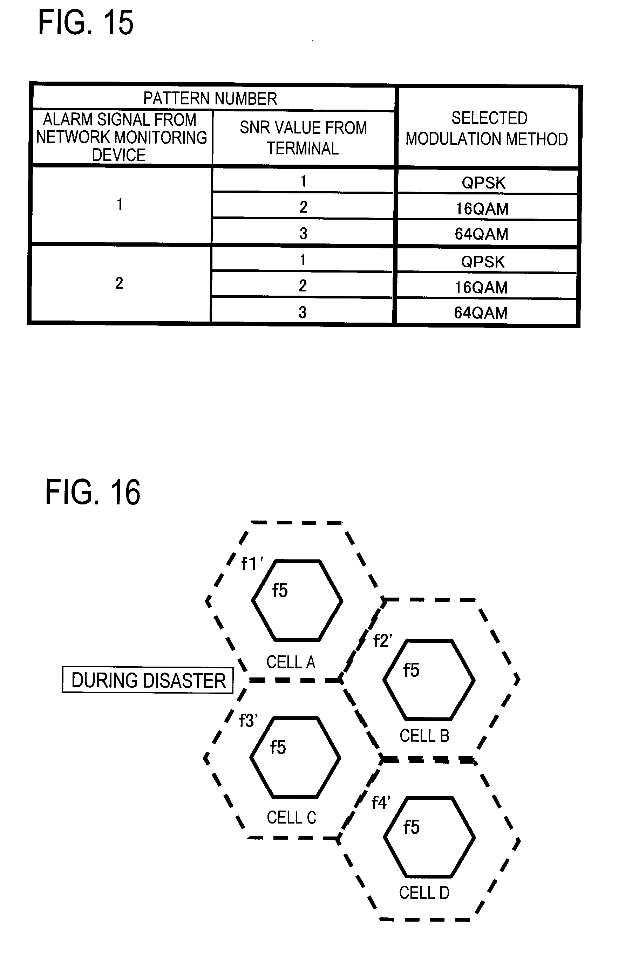

That is, normally operation is similar to the second embodiment. When a disaster state is detected by the network monitoring device 130, an alarm signal ALM is sent and is detected by the control portion 5. The modulation method control portion 50 then selects the modulation method according to the pattern number of the table shown in Fig. 15, and controls the data modulator 10 of the OFDM modulator 1 to modulate data using the selected modulation method. In essence, in the third embodiment only the output power is limited, and the modulation method does not change from that of normal operation.

### Fourth Embodiment

In the third embodiment, an approach was described in which coverage is sacrificed and the circuit capacity is increased; but in the case of emergency calls made during a disaster, it is necessary that telephone conversation be possible from any location.

In the fourth embodiment, to accommodate such emergency calls, dedicated bands f1' to f4' are allocated to the wireless base stations. For these frequencies only, normal operation is performed without lowering the wireless base station output power; the remaining frequencies are used in all cell areas, in degraded-mode operation which increases circuit capacity.

Fig. 16 explains the concept of station placement during a disaster, illustrating the characteristics of this fourth embodiment. Normally operation is similar to that of the third embodiment (Fig. 11A), but during disasters the response is different. That is, as shown in Fig. 16, emergency-use dedicated bands f1' to f4' are allocated in each of the wireless base stations (cell areas A to D).

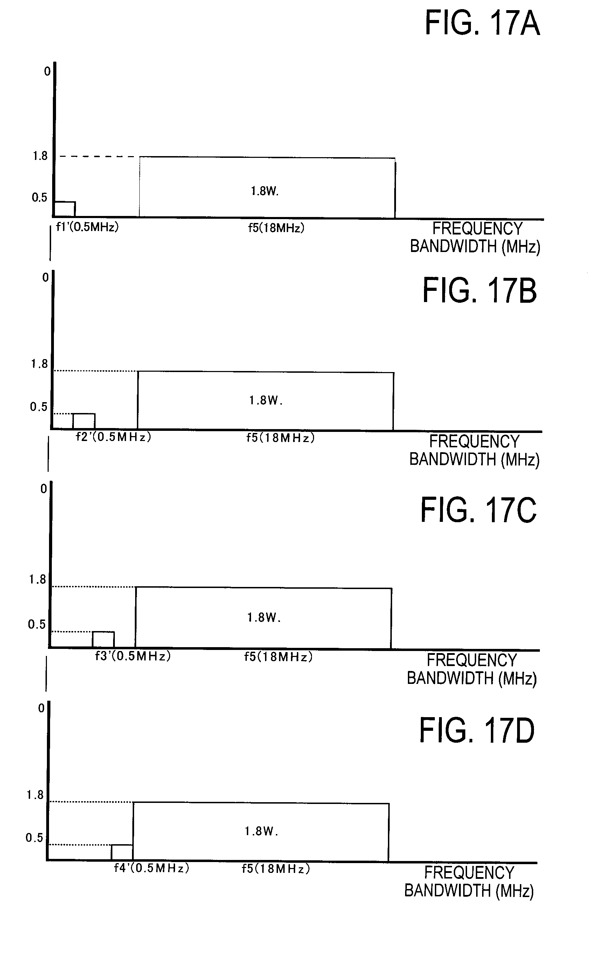

That is, Fig. 17 shows the relationship between frequency allocation and power in cell areas A to D in operation during a disaster ((a) to (d) of Fig. 17). Control during normal operation is similar to the third embodiment, and the frequency bands and output power in cell areas A to D are similar to those of Fig. 12.

In Fig. 17, during a disaster, the bandwidths f1' to f4' used for emergencies are 0.5 MHz in each cell area. Hence the frequency bandwidth f5 which can be used in common in each of the cell areas is 18 MHz (= 20-0.5 x 4).

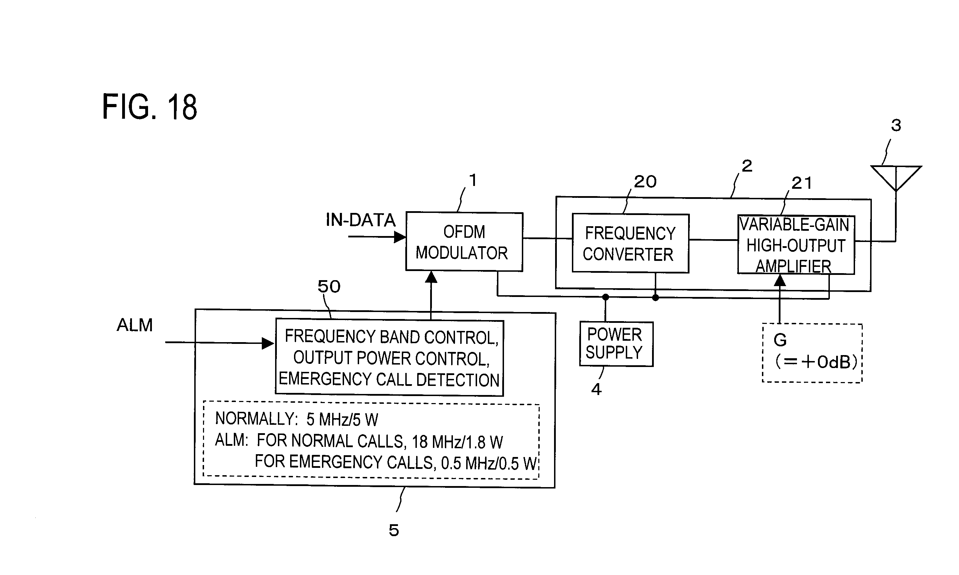

Further, if the power provided to emergency calls is not the same as in ordinary operation, then the entire coverage area cannot be covered. It is sufficient to ensure the same power density during normal operation and during disasters, and so in Fig. 18, 0.5 W (@ 0.5 MHz) is provided to each of f1' to f4', and f5 can be reduced by approximately 10 dB, so that it is sufficient to provide 1.8 W (@ 18 MHz).

Hence the circuit capacity can be increased by 3.7 times (= (0.5+18)/5) while reducing the power supplied to the wireless base stations to approximately 1/2.2 (5 W → 2.3 W).

Fig. 18 shows the configuration of a wireless base station which accommodates the fourth embodiment; the configuration is similar to that of the other embodiments, but the output power in each of the frequency bands is controlled at 5 W during normal operation, and 1.8 W of output power is provided at 18 MHz in common during both emergency and normal operation. In addition, during emergency calls, the OFDM modulator 1 is controlled such that the output power is 0.5 W with bandwidths of 0.5 MHz in each of the cell areas A to D.

Identification of a call as an emergency call may for example be performed by including identification information in the call connection request signals transmitted from wireless terminals MS to the wireless base stations of the areas in which they are located.

As explained in each of the above embodiments, by means of this invention effective degraded-mode operation can be performed such that reduction from large coverage (communication range) is avoided even in states such as times of disaster, or, coverage is reduced, but throughput is increased. Consequently the industrial contribution is substantial.

The above embodiments are provided to facilitate understanding of the invention, and the technical scope of this invention is not limited to these embodiments. The technical scope of this invention is stipulated by the descriptions of the Scope of Claims, and extends to inventions equivalent thereto.

## Claims

1. A wireless base station, which is one among a plurality of wireless base stations in a mobile communication system having the plurality of wireless base stations each forming a cell area, the wireless base station comprising:
a communication unit to allocate prescribed frequency bands and prescribed output powers corresponding to distribution areas of wireless terminals, and to perform communication with the wireless terminals, wherein
during normal operation, the communication unit uses a modulation method with a large number of multiple values to perform communication with wireless terminals in an area with small distribution area in proximity to the center of the cell area, and uses modulation methods with successively smaller numbers of multiple values to perform communication with wireless terminals in larger distribution areas moving toward the peripheral regions of the cell area, and
during a disaster, the communication unit uses a modulation method with the smallest number of multiple values to perform communication over all distribution areas, sets the output power to the lowest multiple value in communication with wireless terminals in an area with small distribution area in proximity to the center of the cell area, and sets the output power so as to increase gradually in communication with wireless terminals in larger distribution areas moving toward the peripheral regions of the cell area.

2. A wireless base station, which is one among a plurality of wireless base stations in a mobile communication system having the plurality of wireless base stations each forming a cell area, the wireless base station comprising:
a communication unit to allocate prescribed frequency bands and prescribed output powers corresponding to distribution areas of wireless terminals, and to perform communication with the wireless terminals, wherein
during normal operation, the communication unit uses a modulation method with a large number of multiple values to perform communication with wireless terminals in an area with small distribution area in proximity to the center of the cell area, and uses modulation methods with successively smaller numbers of multiple values to perform communication with wireless terminals in larger distribution areas moving toward the peripheral regions of the cell area, and
during a disaster, the communication unit uses a plurality of modulation methods to perform communication with wireless terminals in an area with small distribution area in proximity to the center of the cell area, and uses a successively smaller number of modulation methods to perform communication with wireless terminals in larger distribution areas moving toward the peripheral regions of the cell area.

3. The wireless base station according to Claim 2, wherein when communication is performed using the successively smaller number of modulation methods during the disaster, settings are made such that modulation methods with smaller numbers of values are used.

4. A mobile communication system, comprising a plurality of wireless base stations each forming a cell area, wherein
during normal operation, settings are made such that a plurality of frequency bands obtained by equal division of prescribed frequency bands are allocated to the plurality of base stations such that one frequency band used in the cell area is different from that of an adjacent cell area, and
during a disaster, all of the plurality of frequency bands obtained by equal division are allocated in common to the plurality of base stations, and output powers are set to be low such that there is no overlap with adjacent cell areas.

5. A mobile communication system, comprising a plurality of wireless base stations each forming a cell area, wherein
during normal operation, settings are made such that a plurality of frequency bands obtained by equal division of prescribed frequency bands are allocated to the plurality of base stations such that one frequency band used in the cell area is different from that of an adjacent cell area, and
during a disaster, settings are made such that among a plurality of frequency bands obtained by equal division of a first frequency band among the prescribed frequency bands to the cell areas, one frequency band used in the cell area is allocated so as to be different from that of an adjacent cell area, the remaining frequency bands excluding the first frequency band from the prescribed frequency bands are allocated in common to the cell areas of the plurality of base stations, and output powers are set low such that there is no overlap with adjacent cell areas.

6. The mobile communication system according to Claim 5, wherein the first frequency band is used for emergencies.
